# EUROPÄISCHE PATENTSCHRIFT

(11) **EP 0 707 614 B1**
(45) Veröffentlichungstag und Bekanntmachung des Hinweises auf die Patenterteilung: **01.04.1998**
(21) Anmeldenummer: 94918291.9
(22) Anmeldetag: 22.06.1994
(51) Int. Cl.: C08L 77/00, C08L 23/02, C08L 101/00, H01B 3/44, H01B 3/30, H01H 9/34

(54) **Polymerwerkstoff für Niederspannungsschaltgeräte**
Polymeric material for low voltage switchgear
Materiau polymère pour cabinets de baisse tension

(30) Priorität: 05.07.1993 DE 4322351
(43) Veröffentlichungstag der Anmeldung: 24.04.1996
(73) Patentinhaber: SIEMENS AKTIENGESELLSCHAFT, 80333 München (DE)
(72) Erfinder: HAUSCHILDT, Hans-Georg, D-91058 Erlangen (DE); HAAS, Wilfried, D-91058 Erlangen (DE); HACKER, Heinz, D-90441 Nürnberg (DE)
(86) Internationale Anmeldenummer: DE9400711
(87) Internationale Veröffentlichungsnummer: WO9502013

## Beschreibung

Die Erfindung betrifft einen Polymerwerkstoff zur Herstellung von Lichtbogenkammern für Niederspannungsschaltgeräte sowie ein Verfahren zu dessen Herstellung.

In Niederspannungsschaltgeräten, wie Niederspannungsleistungsschalter, soll der Abschaltlichtbogen vom Entstehungsort, d.h. den sich trennenden Kontakten, schnell in die Löscheinrichtung, d.h. das Löschblechpaket, wandern. Diese Lichtbogenbewegung wird, insbesondere bei Kurzschlußabschaltungen, maßgeblich durch die Eigenschaften des Materials der Schalt- bzw. Lichtbogenkammer beeinflußt. Bei der Lichtbogenbewegung kommt es nämlich, bedingt durch die kurzfristig auftretende hohe Temperatur des Lichtbogens, zur Abspaltung gasförmiger Produkte aus dem Kammermaterial. Diese Gase sind zur raschen Löschung des Lichtbogens erwünscht, wenn sie die erforderliche chemische Zusammensetzung besitzen und - pro Schaltvorgang - in der richtigen Menge entstehen, so daß im Innern des Schalters ein zu hoher Druck vermieden wird.

Als Material für Lichtbogenkammern dienen bislang im allgemeinen Formstoffe auf der Basis von cellulosefasergefüllten Melamin-Formaldehyd-Harzen (siehe dazu beispielsweise: Hansjürgen Saechtling "Kunststoff-Taschenbuch", 24. Auflage, Carl Hanser Verlag, München 1989, Seite 452). Dies sind aber duroplastische Materialien, und deshalb ist die Herstellung der Kammern - wegen der hohen Formbelegungszeit und der erforderlichen Nachvernetzung - aufwendig und teuer, obwohl sie spritzgußanalog erfolgt.

Aufgabe der Erfindung ist es, einen Polymerwerkstoff anzugeben, der eine wesentliche Verkürzung der Taktzeiten bei der Herstellung von Lichtbogenkammern für Niederspannungsschaltgeräte ermöglicht.

Dies wird erfindungsgemäß durch einen Werkstoff mit einer thermoplastischen Polymermatrix aus Polyamid oder Polyolefin erreicht, die ein durch ausgehärtetes Melamin-Formaldehyd-Harz umhülltes Cellulosematerial enthält.

Der Polymerwerkstoff nach der Erfindung ist ein thermoplastisches Material, d.h. ein Thermoplastcompound. Die Vorteile dieses Compounds - im Vergleich zu Duroplastcompounds - liegen in einer verbesserten Verarbeitbarkeit. Während nämlich bei duroplastischem Material beim Spritzgießen beispielsweise ein 75 s-Takt eingehalten werden muß, sind beim Thermoplastcompound nach der Erfindung Taktzeiten bis herab zu 3 s erreichbar. Damit ist aber eine wesentlich wirtschaftlichere Fertigung möglich. Darüber hinaus ist das thermoplastische Material dem Duroplast in elektrischer Hinsicht zumindest ebenbürtig, die mechanischen Eigenschaften sind - aufgrund einer höheren Flexibilität - sogar besser.

Das aus dem Thermoplastcompound hergestellte Kammermaterial zeigt ein besseres Lichtbogenlöschverhalten als das bislang eingesetzte Material. Es ist ferner auch hinsichtlich des Schaltvermögens überlegen, da die Druckbelastung wesentlich niedriger ist (Reduzierung des Maximaldruckes bis zu 50 %).

Beim Thermoplastcompound nach der Erfindung besteht die Polymermatrix aus Polyamid oder Polyolefin; Polyamid wird dabei bevorzugt verwendet. Als Cellulosematerial, das vorteilhaft in Form von Fasern eingesetzt wird, kann insbesondere reine Cellulose, Holzmehl, Papier oder Zellwolle dienen; Cellulose wird dabei bevorzugt.

Die einzelnen Komponenten des Thermoplastcompound liegen vorzugsweise in folgendem Verhältnis vor: Polymer, d.h. Polyamid bzw. Polyolefin, zu Melamin-Formaldehyd-Harz/ Cellulosematerial: 6:1 bis 1:1, vorzugsweise 2:1; Melamin-Formaldehyd-Harz zu Cellulosematerial: 3:2 bis 1:2, vorzugsweise 1:1.

Der Polymerwerkstoff wird erfindungsgemäß in der Weise hergestellt, daß mit Melamin-Formaldehyd-Harz umhülltes Cellulosematerial und Polymer bei Temperaturen oberhalb 150°C homogen miteinander vermischt werden. Die Temperatur ist dabei abhängig von der Verarbeitungstemperatur des eingesetzten Polymers. Sie kann bei Polyamid zwischen etwa 190 und 300°C liegen, bei Polyolefin beträgt sie beispielsweise 150°C (Polyethylen) bzw. 200°C (Polypropylen).

Das Problem, das sich bei der Entwicklung des Polymermaterials nach der Erfindung gestellt hat, besteht in der zerstörungsfreien Einarbeitung temperaturempfindlicher Materialien in Thermoplaste. Der Einsatz von Cellulose in hochschmelzenden thermoplastischen Systemen, wobei beim Ein- bzw. Verarbeiten Temperaturen > 150°C erforderlich sind, ist nämlich - aufgrund der thermooxidativen Empfindlichkeit der Cellulose - an sich nicht möglich.

Die Erfindung löst dieses Problem nun in der Weise, daß das Cellulosematerial in situ mit einer Schutzschicht umhüllt wird, die - bei kurzzeitig höherer thermischer Belastung - eine Oxidation bzw. Zersetzung verhindert. Dadurch läßt sich die Cellulose problemlos in höher schmelzende Thermoplaste, wie Polyamid, einarbeiten.

Bei der Herstellung des Polymerwerkstoffs nach der Erfindung wird vorzugsweise von unvernetztem Melamin-Formaldehyd-Harz ausgegangen; dabei gelangt im allgemeinen ein handelsübliches vorreagiertes Melamin-Formaldehyd-Harz (kurz Melaminharz), das mit Cellulose gefüllt ist, zum Einsatz. Während des Einarbeitungs- bzw. Mischvorgangs härtet die Melaminharz-Formmasse in der Polymerschmelze aus, d.h. es erfolgt eine Vernetzung, und schützt so das Cellulosematerial vor einem thermooxidativen Angriff. Der dabei gebildete cellulosegefüllte Melaminharz-Formstoff, der in der Polymermatrix homogen verteilt ist, übernimmt gleichzeitig die Funktion eines Füllstoffs, was gleichbedeutend ist mit einer mechanischen Verstärkung.

Ein weiterer wesentlicher Vorteil der Erfindung liegt darin, daß die Möglichkeit eines Recycling besteht. Dies gilt sowohl für Abfall, der bei der Spritzgußherstellung von Lichtbogenkammern beispielsweise in Form von Angüssen anfällt, als auch für den zu Formteilen verspritzten Thermoplastcompound insgesamt. Gebrauchte Formteile können nämlich zerkleinert werden, und das dabei erhaltene Material kann - direkt oder in Abmischung mit frischem Material - zum Abspritzen neuer Lichtbogenkammern dienen. Das bislang verwendete duroplastische Material dagegen ist - für sich - einem Recycling nicht zugänglich, weil es dreidimensional vernetzt ist.

Anhand von Ausführungsbeispielen soll die Erfindung noch näher erläutert werden.

### Beispiel 1

PA 6 (Polyamid aus ε-Caprolactam) wird im Verhältnis 2:1 mit einem unvernetzten Melaminharz (MF) gemischt, das mit Cellulose im Verhältnis 1:1 gefüllt ist. Dieses Gemisch wird bei einer Temperatur von 230 bis 240°C in einen Kneter eingebracht und ca. 10 min geknetet. Bedingt durch die Verarbeitungstemperatur des PA 6 von ca. 240°C wird das unvernetzte duroplastische Material, d.h. der MF/Cellulose-Compound, vernetzt und gleichzeitig wird die Cellulose umhüllt.

Der auf diese Weise hergestellte Thermoplastcompound - Zusammensetzung: 66,6 % Polyamid, 16,7 % Melamin-Formaldehyd-Harz, 16,7 % Cellulose - weist gute Lichtbogenlöscheigenschaften auf und kann einwandfrei verspritzt werden (Taktzeit: ca. 25 s). Die Cellulose wirkt dabei sowohl als Wasserreservoir für die Lichtbogenlöschung als auch - zusammen mit dem vernetzten Melaminharz - als Füllstoff zur Verstärkung des Polyamids.

### Beispiel 2

Es wird entsprechend Beispiel 1 vorgegangen, aber ein gegensinnig drehender Zweiwellenextruder verwendet. Die Verweilzeit (Reaktionszeit) beträgt hierbei lediglich 5 bis 6 min, so daß ein kontinuierliches Verfahren möglich ist. Der dabei erhaltene Thermoplastcompound ist vollständig ausgehärtet.

### Beispiel 3

Es wird entsprechend Beispiel 1 vorgegangen, wobei als Polymer PA 66 (Polyamid aus 1,6-Hexandiamin und Adipinsäure) eingesetzt wird; die Verarbeitungstemperatur beträgt ca. 275°C. Der erhaltene Thermoplastcompound weist eine hohe Dauerwärmebeständigkeit auf.

### Beispiel 4

In einem Zweiwellenextruder wird PA 66 direkt nach der Einfüllzone im Gegenlauf bei einer Temperatur von 275 bis 280°C aufgeschmolzen. Unmittelbar danach wird - im Verhältnis 2:1 - ein MF/Cellulose-Compound mittels einer Dosiereinrichtung in die Polyamidschmelze eingebracht. Dabei umhüllt das bei der hohen Temperatur von ca. 280°C sofort vernetzende Melaminharz die Cellulose und schützt sie vor thermischer Zersetzung. Während einer drehzahlabhängigen Verweilzeit von 4 bis 8 min wird eine ausreichende Vernetzung des Melaminharzes und eine homogene Verteilung in der Polymermatrix erreicht. Die aus dem Düsenkopf des Extruders austretende Schmelze wird als Strang abgezogen, gekühlt und granuliert. Der auf diese Weise hergestellte Thermoplastcompound ist homogen und kann bei Temperaturen von 275 bis 280°C zu einwandfreien Formkörpern verspritzt werden.

### Beispiel 5

Zur Verarbeitung von Duroplastabfällen auf Basis von Melaminharz, die mit den unterschiedlichsten cellulosehaltigen Materialien gefüllt sind, wird in einem Zweiwellenextruder, der im Gleichlauf oder im Gegenlauf betrieben wird, PA 6 oder PA 66 oder auch ein anderes Polyamid, wie PA 12 (aus ε-Laurinlactam) oder PA 610 (aus 1,6-Hexandiamin und Sebacinsäure), aufgeschmolzen und über eine Dosiereinrichtung mit dem gemahlenen Abfallmaterial im Verhältnis von 6:1 bis 1:1 versetzt; die Korngröße des pulverförmigen Abfallmaterials soll < 0,1 mm sein. Der - nach einer Vorgehensweise entsprechend Beispiel 4 - erhaltene Thermoplastcompound wird granuliert und getrocknet und kann dann unmittelbar zu Lichtbogenkammern verspritzt werden.

In entsprechender Weise kann mit cellulosehaltigen Harnstoff-Formaldehyd-Harzen verfahren werden, die dann in Polyolefin eingearbeitet werden.

## Patentansprüche

1. Polymerwerkstoff zur Herstellung von Lichtbogenkammern für Niederspannungsschaltgeräte, **gekennzeichnet, durch** eine thermoplastische Polymermatrix aus Polyamid oder Polyolefin, die ein durch ausgehärtetes Melamin-Formaldehyd-Harz umhülltes Cellulosematerial enthält, wobei Polymer und Melamin-Formaldehyd-Harz/Cellulosematerial im Verhältnis von 6:1 bis 1:1 vorliegen.

2. Polymerwerkstoff nach Anspruch 1, **dadurch gekennzeichnet**, daß das Verhältnis von Polymer zu Melamin-Formaldehyd-Harz/Cellulosematerial 2:1 beträgt.

3. Polymerwerkstoff nach Anspruch 1 oder 2, **dadurch gekennzeichnet,** daß das Verhältnis von Melamin-Formaldehyd-Harz zu Cellulosematerial 3:2 bis 1:2, vorzugsweise 1:1, beträgt.

4. Polymerwerkstoff nach einem der Ansprüche 1 bis 3, **dadurch gekennzeichnet**, daß das Cellulosematerial in Faserform vorliegt.

5. Verfahren zur Herstellung des Polymerwerkstoffs nach einem oder mehreren der Ansprüche 1 bis 4, **dadurch gekennzeichnet**, daß mit Melamin-Formaldehyd-Harz umhülltes Cellulosematerial und Polymer bei Temperaturen oberhalb 150°C homogen miteinander vermischt werden.

6. Verfahren nach Anspruch 5, **dadurch gekennzeichnet**, daß unvernetztes Melamin-Formaldehyd-Harz eingesetzt wird.

## Claims

1. Polymer material for the manufacture of arcing chambers for low-voltage switchgear, characterised by a thermoplastic polymer matrix made of polyamide or polyolefin, which polymer matrix contains a cellulose material encased in hardened melamine formaldehyde resin, with polymer and melamine formaldehyde resin/cellulose material being present in the ratio of 6:1 to 1:1.

2. Polymer material according to claim 1, characterised in that the ratio of polymer to melamine formaldehyde resin/cellulose material amounts to 2:1.

3. Polymer material according to claim 1 or 2, characterised in that the ratio of melamine formaldehyde resin to cellulose material amounts to 3:2 to 1:2, preferably 1:1.

4. Polymer material according to one of the claims 1 to 3, characterised in that the cellulose material is present in fibrous form.

5. Method for the manufacture of the polymer material according to one or more of the claims 1 to 4, characterised in that cellulose material, encased in melamine formaldehyde resin, and polymer are mixed homogenously together at temperatures above 150°C.

6. Method according to claim 5, characterised in that non-cross-linked melamine formaldehyde resin is used.

## Revendications

1. Matériau polymère pour la fabrication de boîtes d'extinction d'arcs destinées à des appareils de coupure basse tension, caractérisé par une matrice polymère thermoplastique en polyamide ou en polyoléfine, qui contient une matière cellulosique enveloppée d'une résine de mélamine-formaldéhyde durcie dans lequel le polymère et la résine de mélamineformaldéhyde/matière cellulosique sont présents dans un rapport de 6:1 à 1:1.

2. Matériau polymère selon la revendication 1, caractérisé en ce que le rapport du polymère à la résine de mélamine-formaldéhyde/matière cellulosique s'élève à 2:1.

3. Matériau polymère selon la revendication 1 ou 2, caractérisé en ce que le rapport de la résine de mélamine-formaldéhyde à la matière cellulosique s'élève de 3:2 à 1:2, de préférence à 1:1.

4. Matériau polymère selon l'une quelconque des revendications 1 à 3, caractérisé en ce que la matière cellulosique est présente sous forme fibreuse.

5. Procédé de préparation du matériau polymère selon une ou plusieurs des revendications 1 à 4, caractérisé en ce qu'on mélange l'un avec l'autre, de manière homogène, la matière cellulosique enveloppée d'une résine de mélamine-formaldéhyde et le polymère à des températures supérieures à 150°C.

6. Procédé selon la revendication 5, caractérisé en ce qu'on met en oeuvre de la résine de mélamine-formaldéhyde non réticulée.
